# EUROPÄISCHE PATENTSCHRIFT

(11) **EP 0 774 677 B1**
(45) Veröffentlichungstag und Bekanntmachung des Hinweises auf die Patenterteilung: **08.07.1998**
(21) Anmeldenummer: 96117126.1
(22) Anmeldetag: 25.10.1996
(51) Int. Cl.: G02B 6/245

(54) **Vorrichtung zum Entfernen der Schutzhülle von optischen Fasern**
Device for removing the protective sheath from an optical fibre
Dispositif pour enlever la gaine de protection d'une fibre optique

(30) Priorität: 15.11.1995 DE 29518100 U
(43) Veröffentlichungstag der Anmeldung: 21.05.1997
(73) Patentinhaber: REHAU AG + Co, 95111 Rehau (DE)
(72) Erfinder: Beyer, Wolfgang,c/o Rehau AG + Co., 95111 Rehau (DE); Jobst, Stefan,c/o Rehau AG + Co., 95111 Rehau (DE)

(56) Entgegenhaltungen:
- DE-A- 1 465 579
- DE-A- 4 236 251
- GB-A- 525 691
- US-A- 4 447 949
- US-A- 4 972 581
- US-A- 5 003 846

## Beschreibung

Die Erfindung betrifft eine Vorrichtung zum Entfernen der Schutzhülle von optischen Fasern, bestehend aus einer Einrichtung zur Führung der aus den optischen Fasern und der Schutzhülle bestehenden Faserbündeladerhülle sowie einer tangential zur Faserbündeladerhülle angeordneten Messerklinge, welche bei einer Längsbewegung der Faserbündeladerhülle in der Führung Teilbereiche der Schutzhülle abschält.

Eine gattungsgemäße Vorrichtung ist aus der DE 42 36 251 A1 bekannt. Dort ist ein Schneidwerkzeug für Faserbündeladerhüllen beschrieben, welches eine mit einer Nut versehene Basis besitzt, in deren Nut die Faserbündeladerhülle eingesetzt wird. Über der Nut mit der Faserbündeladerhülle wird ein mit nach oben gerichteter Schneide versehenes Messer installiert und mit diesem Messer werden die über den Nutenrand vorstehenden Teilbereiche der Faserbündeladerhülle bei deren Längsdurchziehen durch die Nut abgeschält und die Faserbündeladerhülle damit geöffnet. Die Nut kann bei dieser bekannten Vorrichtung durch Auflegen von Distanzscheiben auf die Basis zur Aufnahme von im Durchmesser dikkeren Faserbündeladerhüllen vergrößert werden. Obwohl das Öffnen von Faserbündeladerhüllen mit dieser Vorrichtung möglich ist, ist das Arbeiten damit umständlich und zeitaufwendig.

Aus dem US-Patent 4,972,581 ist ein weiteres Schneidwerkzeug zum Öffnen von Faserbündeladerhüllen bekannt, das aus drei Teilen besteht. Verwendet wird hier ein kubischer Grundkörper, eine Klammer und eine Messerklinge. Hier ist der Zusammenbau von Grundkörper und Klammer umständlich und es kann zu ungewollten Verletzungen der Faserbündeladerhülle führen, da das Einschieben der Klammer in den Grundkörper, welche zur Führung der Faserbündeladerhülle im Werkzeug dient, bereits zu einem Eindringen der Messerklinge in die Faserbündeladerhülle führt. Ein nachträgliches beschädigungsloses Verschieben des Werkzeuges an die gewünschte Anschnittstelle der Faserbündeladerhülle ist damit nicht mehr möglich.

Ferner ist mit dieserm Werkzeug die Gefahr einer Verletzung der innenliegenden Lichtwellenleiterfasern während des Anschnitts gegeben, da die Fasern mit Überlänge schlangenlinienförmig in der Faserbündeladerhülle liegen und damit wenigstens partiell die Innenwand der Faserbündeladerhülle berühren. Aufgrund der schräg zur Faserbündeladerhülle gerichteten Messerschneide ist eine Verletzung der Lichtwellenleiterfasern während des Längsschnittes nicht auszuschließen.

Hier setzt die Erfindung ein, die es sich zur Aufgabe gestellt hat, die Nachteile des bekannten Standes der Technik zu vermeiden und ein Schneidwerkzeug anzugeben, welches es auch dem ungelernten Monteur ermöglichst, Faserbündeladerhüllen zur Entnahme einzelner Lichtwellenleiterfasern gefahrlos, einfach und mit reproduzierbaren Ergebnissen anzuschneiden und zu öffnen. Erfindungsgemäß wird hierzu vorgeschlagen, daß das Schneidwerkzeug aus einem zweiteiligen Griff besteht, dessen beide Griffteile gelenkig miteinander verbunden sind, daß am ersten Griffteil über einen Zangenbacken eine Grundplatte mit Nutenöffnung fest und bewegliche Klemmbacken verschwenkbar angelenkt sind, daß am zweiten Griffteil über einen Zangenbacken an dessen freiem Ende ein Druckelement mit einer Messerklinge angeordnet ist, und daß die Zustellung der auf dem Druckelement befestigten Messerklinge in die Anschnittposition durch Verschwenken des oberen Griffteils zum unteren Griffteil erfolgt.

Die Vorteile des erfindungsgemäßen Schneidwerkzeugs werden in erster Linie darin gesehen, daß alle zum Anschnitt der Faserbündeladerhülle benötigten Teile fest mit dem Schneidwerkzeug verbunden sind, so daß zum Öffnen der Faserbündeladerhülle sogar eine Einhandbedienung möglich ist. Hierzu wurde für das erfindungsgemäße Schneidwerkzeug das Prinzip eines verrastenden Griffzangenverschlusses gewählt. So wird durch das Schließen des oberen Griffteils zum unteren Griffteil hin bis zur Verrasterung das Schneidwerkzeug automatisch zum Anschnitt der Faserbündeladerhülle vorbereitet.

Nachdem diese Verrasterung in verschiedenen Stufen durchgeführt werden kann, besteht weiterhin die Möglichkeit, die genaue Positionierung des Anschnittes der Faserbündeladerhülle an einer vorgegebenen Stelle noch vor dem Endverschluß des Schneidwerkzeugs festzulegen.

Es hat sich als vorteilhaft erwiesen, daß in die Nutenöffnung der Grundplatte passende Führungsnutkörper einschiebbar sind. Die Querschnitte diese Führungsnutkörper sind zweckmäßigerweise schwalbenschwanzförmig profiliert und sie passen in die entsprechend gestaltete Nutenöffnung an der Grundplatte. Die Führungsnutkörper weisen eine quer zu ihrer Längsrichtung eingelassene Arretierungsnut zur Festlegung in der Grundplatte auf.

In den Führungsnutkörpern befindet sich auf der Seite des schwalbenschwanzförmigen Querschnitts eine Längsnut, die bei den verschiedenen Führungsnutkörpern verschiedenen Durchmessern der Faserbündeladerhüllen angepaßt ist. Diese Längsnut ist so gestaltet, daß die Faserbündeladerhülle mit annähernd einem Drittel ihres Durchmessers die Nutenöffnung überragt.

Es hat sich als zweckmäßig erwiesen, daß an der Grundplatte wenigstens zwei zusammenhängende Klemmbacken zur sicheren Führung der Faserbündeladerhülle im Schneidwerkzeug schwenkbar festgelegt sind. Diese beiden Klemmbacken dienen zur seitlichen Begrenzung der Faserbündeladerhüllen in ihrem Sitz in der Längsnut des Führungsnutkörpers und werden mit der Schwenkbewegung des oberen Griffteils in seine Endstellung in ihre begrenzende Position gebracht. Weiter hat es sich als zweckmäßig erwiesen, daß die Klemmbacken mit Federdruck von der Grundplatte abgehalten werden. Dieser über die Klemmbacken aufgebaute Gegendruck wirkt beim Schließen des zweiteiligen Griffs des erfindungsgemäßen Schneidwerkzeugs als Hilfe zur Herstellung des Haltedrucks und damit zum Verschluß der beiden Griffteile des zweiteiligen Griffs.

Weiter erscheint es vorteilhaft, daß die Klemmbacken durch zunehmendes Eindrehen einer Rändelschraube zunächst noch verschieblich gehaltert und letztendlich unverschieblich festgelegt sind. Die anfängliche Verschieblichkeit der Klemmbacken dient zur endgültigen Positionierung der Faserbündeladerhülle und wird zu einer Klemmverbindung erweitert, sobald diese Positionierung erreicht ist. Die Klemmbacken selbst sind ebenfalls zur Führung der Fasserbündeladerhüllen auf ihrer Unterseite mit einer Führungsnut ausgestattet.

Zweckmäßigerweise ist das Druckelement fest mit dem oberen Griffteil des zweiteiligen Griffs verbunden und die Messerklinge ist auf dem Druckelement festlegbar gestaltet, wobei diese Festlegung beispielsweise mittels einer Verschraubung lösbar erfolgen kann. Dabei hat sich als vorteilhaft erwiesen, daß das Druckelement die Messerklinge im Winkel zwischen 20° und 35°, vorzugsweise im Winkel von 30° zur Längsachse der Faserbündeladerhülle anstellt. Auf diese Weise lassen sich die besten Anschneidergebnisse erzielen, ohne daß eine Verletzungsgefahr der in der Faserbündeladerhülle liegenden einzelnen Lichtwellenleiterfasern zu befürchten wäre. Zur Vermeidung dieser Gefahr dient weiterhin, daß die Messerklinge einen doppelten einseitigen Schneidenanschliff aufweist. Dieser Schneidenanschliff besitzt einen Schneidenwinkel zwischen 20° und 30°, vorzugsweise 24° und einen spitzen Winkel zwischen 35° und 40°, vorzugsweise 36°. Dabei ist es von Vorteil, daß die Messerklinge auf ihrer Anschliffseite mit dem Schneidenwinkel parallel zur Längsachse der Faserbündeladerhülle zugestellt ist. Durch diese Winkelstellungen und Baumaßnahmen wird beim Schließen der Griffteile des zweiteiligen Griffs die Faserbündeladerhülle vom Schneidenbereich der Messerklinge elastisch deformiert, bevor überhaupt der Schneidevorgang beginnt. Der Wulst der elastischen Deformation wird beim Schneidvorgang vor der Schneide der Messerklinge hergeschoben, so daß sichergestellt ist, daß die Schneide nur die Wand der Faserbündeladerhülle im Bereich des Überstands aus der Längsnut des Führungsnutkörpers erfaßt.

Die in der Faserbündeladerhülle liegenden einzelnen Lichtwellenleiterfasern werden dabei von der Anschliffseite nach unten in die Faserbündeladerhülle gedrückt und können somit von der Schneide der Messerklinge nicht erfaßt werden.

Es hat sich als vorteilhaft erwiesen, daß das Druckelement auf seiner der Faserbündeladerhülle zugewandten Seite eine Aussparungsnut zur druckfreien Führung der Faserbündeladerhülle besitzt. Die Faserbündeladerhülle kann auf diese Weise außerhalb der Schneidzone durch das Schneidwerkzeug geführt werden, wodurch sich eine Erleichterung bei der Handhabung des Schneidvorgangs ergibt.

Vorteilhaft ist an dem Druckelement eine Druckfeder befestigt, welche als Niederhalter für die Klemmbacken und als Schutzbügel für den Schneidenanschliff dient. Diese Druckfeder dient zur Vorfixierung der Klemmbacken beim Verschwenkvorgang der beiden Griffteile des zweiteiligen Griffs zueinander und bewirkt gleichzeitig einen Verletzungsschutz für das Montagepersonal. Die Messerklinge selbst ist mit einer ihrer Ausschliffseiten parallel zur Führüngsachse angeordnet, wodurch sich die Nutzungsmöglichkeit dieses Bauteils verdoppelt.

In der Zeichnung sind Ausführungsbeispiele des erfindungsgemäßen Schneidwerkzeugs schematisch dargestellt; es zeigt:
Fig. 1 die Seitenansicht des geschlossenen Schneidwerkzeugs,
Fig. 2 einen Ausschnitt der Vorderansicht von Fig. 1,
Fig. 3 die Ansicht aus Fig. 2, jedoch im geöffneten Zustand des Schneidwerkzeugs,
Fig. 4 einen auswechselbaren Führungsnutkörper,
Fig. 5 die Messerklinge ohne Druckelement in Anschnittposition.

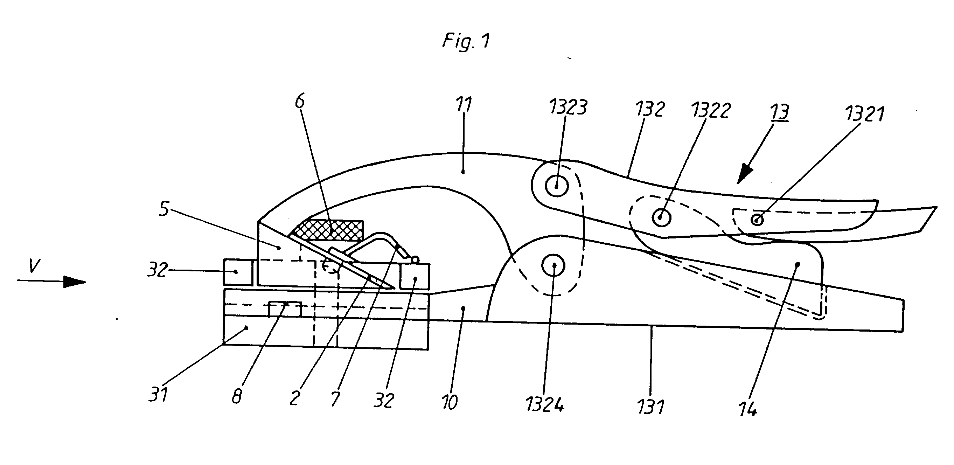

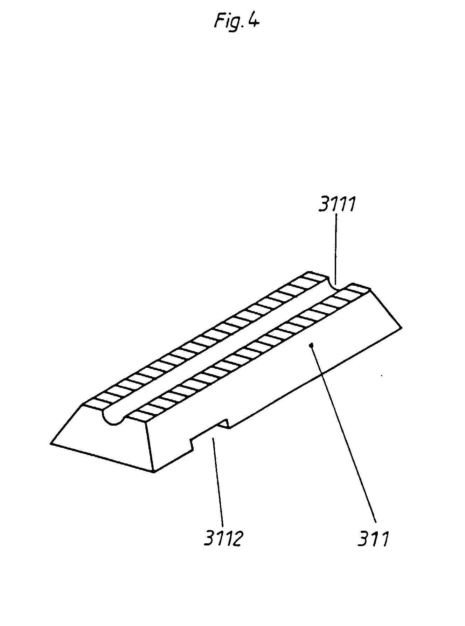

In Fig. 1 ist das untere Griffteil 131 als Träger der Grundplatte 31 ausgebildet. Die Verbindung dieser beiden Konstruktionselemente untereinander erfolgt über den Zangenbacken 10 und ist starr und unbeweglich. Die Grundplatte 31 besitzt den in die Nutenöffnung einschiebbaren Führungsnutenkörper 311 (Fig. 4) sowie die über ein Gelenk beweglichen Klemmbacken (32). Der über die Gelenkpunkte 1321, 1323 bewegliche obere Griffteil 132 besitzt an seinem vorderen Zangenbacken 11 das Druckelement 5 mit den niedergedrückten Klemmbacken 32 und der Messerklinge 2. Der Zangenbacken 11 ist mit dem unteren Griffteil 131 über den Drehpunkt 1324 schwenkbeweglich verbunden. Der Drehpunkt 1322 im oberen Griffteil 132 ist der Raste 14 zugeordnet, über welche die beiden Griffteile 131, 132 bei gleichzeitig fester Verspannung des Druckelementes 5 auf dem Unterteil 31 gegeneinander verrastet werden können. Diese Raststellung kann durch Überdrücken der Federspannung zwischen den einzelnen Griffteilen 131, 132, aufgehoben und damit die Schließstellung des Schneidwerkzeugs geöffnet werden.

Die Justierung und Festlegung der Klemmbacken 32, d.h. ihre genaue Anpassung an den jeweiligen Durchmesser der Faserbündeladerhülle kann mit einer Rändelschraube 6 erfolgen. Dabei wird eine Vorfixierung der Klemmbacken 32 zum leichteren Einlegen und Halten der Faserbündeladerhülle durch eine am Druckelement 5 befestigte Druckfeder 7 erzielt, die beim Schließen des oberen Griffteils 132 zum unteren Griffteil 131 und damit beim Zusammenschwenken der Zangenbacken 10, 11 die Klemmbacken 32 niederdrückt und auf diese Weise die Fasserbündeladerhülle zwischen den Nuten 3111 des Führungsnutkörpers 311 und 321 der Klemmbacken 32 hält. Nach diesem Arbeitsschritt kann die Feinjustierung und Anschlageinstellung der Klemmbacken 32 über die Rändelschraube 6 erfolgen. Dieser Aufbau des erfindungsgemäßen Schneidwerkzeugs ist vorteilhaft, da er eine sehr genaue Einstellung auf die jeweiligen Durchmesser der Faserbündeladerhüllen erlaubt und dem Monteur jederzeit eine Kontroll- und Einflußmöglichkeit einräumt.

In einer anderen Ausführungsform wird die Rändelschraube 6 durch einen Rastmechanismus ersetzt, welcher das Druckelement 5 mit den niedergedrückten Klemmbacken 32 in Position hält. Diese Position wird über den Rastmechanismus auch dann beibehalten, wenn der Druck der Feder 7 auf die Klemmbacken 32 zurückgenommen wird. Dadurch entfällt das Zudrehen der Rändelschraube 6 und die Fixierung der Klemmbacken 32 erfolgt automatisch beim Schließen während des Zusammenschwenkens des oberen Griffteils 132 und des unteren Griffteils 131 bzw. der Zangenbacken 10, 11.

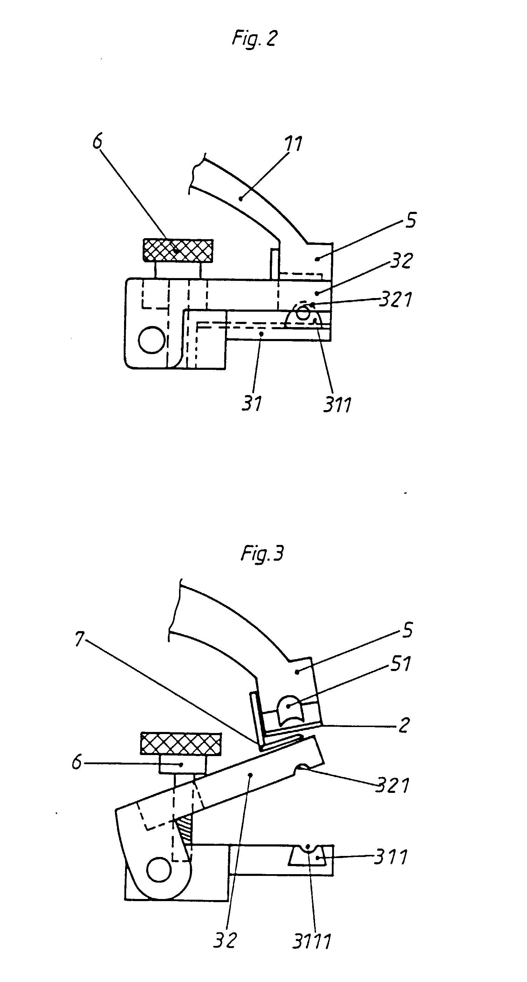

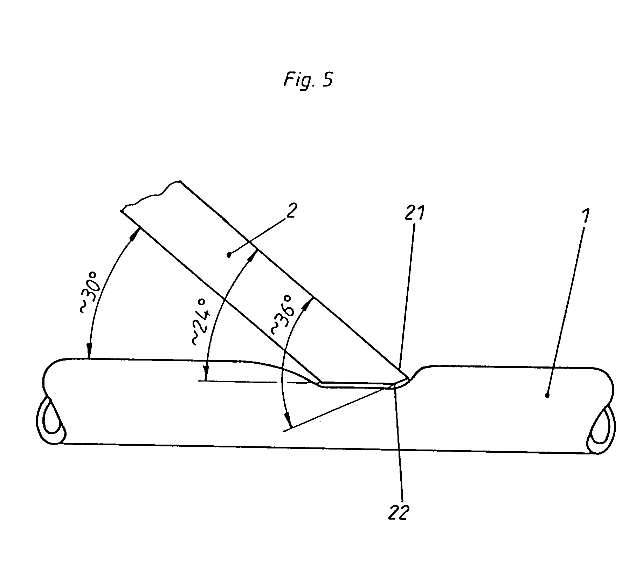

Der obere, bewegliche Zangenbacken 11 ist der Träger des Druckelementes 5 mit der daran befestigten, schräg angestellten Messerklinge 2. An der Unterseite des Druckelementes 5 befindet sich die Aussparungsnut 51 (Fig. 3), die genügend Freiraum auch für den größten Druchmesser der anzuschneidenden Faserbündeladerhülle 1 bietet. Die Schneide 21 der Messerklinge 2 ist dabei so angeschliffen, daß eine Verletzung der Lichtwellenleiterfasern beim Anschnitt ausgeschlossen ist, da die Lichtwellenleiterfasern nur mit einer stumpfen Kante 22 der Messerklinge 2 in Berührung kommen können (Fig. 5). Der Anschnitt der Faserbündeladerhülle 1 erfolgt auf die Weise, daß beim Schließen der Zangenbacken 10, 11 die Faserbündeladerhülle 1 vom Schneidenbereich der Messerklinge 2 elastisch deformiert wird und so die Messerklinge 2 eine aufgewölbte Angriffsfläche zum Einschnitt in die Faserbündeladerhülle 1 erhält. Dabei wird das Maß der Deformation bestimmt durch die Höhe des aus der Nut 3111 des Führungsnutkörpers 311 herausragenden Teils der Faserbündeladerhülle 1 und vorteilhafterweise liegt dieses Maß bei ca. ein Drittel des Durchmessers der Faserbündeladerhülle 1. Weil das Druckelement 5 und damit die Messerklinge 2 mit ihrer Messerschneide 21 beim Schließen der Zangenbacken 10, 11 direkt parallel auf der Grundplatte 31 und den über die Nut 3111 herausstehenden Teil der Faserbündeladerhülle 1 aufsetzt, ist ein vorzeitiges Einschneiden in die Faserbündeladerhülle nicht möglich. Der Anschnitt erfolgt erst dann, wenn die Faserbündeladerhülle 1 durch das Schneidwerkzeug hindurchgezogen wird.

Die am Druckelement 5 befestigte Druckfeder 7 ist so geformt, daß sie neben der Andruckarbeit für die Klemmbacken 32 gleichzeitig als Schutzbügel für die Messerschneide 21 dient. Verletzungen des Monteurs sind deshalb auch im geöffneten Zustand des Schneidwerkzeugs ausgeschlossen.

Fig. 2 zeigt einen Ausschnitt der Vorderansicht von Fig. 1. Hierbei wurde auf die Darstellung des oberen Griffteils 132 bewußt verzichtet. Gezeigt ist die Grundplatte 31 mit dem darin einschiebbaren und auswechselbaren Führungsnutkörper 311. Darüber sind die gegen Federdruck verschwenkbaren und justierbaren Klemmbacken 32 mit der darin eingelassenen Führungsnut 321 angeordnet. Über die Rändelschraube 6 ist die Fixierung der Klemmbacken 32 mit der Grundplatte 31 erfolgt.

Fig. 3 zeigt die gleiche Ansicht wie Fig. 2, jedoch in geöffnetem Zustand mit geöffneten Klemmbacken 32. Gleiche Merkmale haben hier gleiche Bezugszeichen erhalten. Der Öffnungswinkel der Klemmbacken 32 ist hier abhängig von der Einschraubtiefe der Rändelschraube 6.

Fig. 4 zeigt den auswechselbaren Führungsnutkörper 311 mit der längsverlaufenden Nutenöffnung 3111 für die Aufnahme der Faserbündeladerhülle. Diese Nutenöffnung 3111 kann bei verschiedenen Führungsnutkörpern 311 an die unterschiedlichen Durchmesser der Faserbündeladerhüllen 1 angepaßt sein. Ferner ist ersichtlich die querverlaufende Arretierungsnut 3112 an der Unterseite des Führungsnutkörpers 311, in die ein zu dessen Arretierung in der Grundplatte 31 an deren Unterseite befestigtes Federblech verriegelnd eingreifen kann.

Fig. 5 zeigt die Messerklinge 2 ohne Druckelement 5 in Anschnittposition, wobei die Faserbündeladerhülle im Bereich des Aufsetzens des Schneidenbereichs elastisch deformiert ist und die verschiedenen Anschliffwinkel der Messerschneide 21 verdeutlicht werden.

## Patentansprüche

1. Vorrichtung zum teilweisen Entfernen der Schutzhülle von optischen Fasern, bestehend aus einer Einrichtung zur Führung der aus den optischen Fasern und der Schutzhülle bestehenden Faserbündeladerhülle, sowie einer tangential zur Faserbündeladerhülle angeordneten Messerklinge, welche bei einer Längsbewegung der Faserbündeladerhülle in der Führung Teilbereiche der Schutzhülle abschält, gekennzeichnet durch einen zweiteiligen Griff (13), dessen beide Griffteile (131, 132) gelenkig miteinander verbunden sind, bei dem am ersten Griffteil (131) über einen Zangenbacken (10) eine Grundplatte (31) mit Nutenöffnung (310) fest und bewegliche Klemmbacken (32) verschwenkbar angelenkt sind, am zweiten Griffteil (132) über einen Zangenbacken (11) an dessen freiem Ende ein Druckelement (5) mit einer Messerklinge (2) angeordnet ist und die Zustellung der auf dem Druckelement (5) befestigten Messerklinge (2) in die Anschnittposition durch Verschwenken des oberen Griffteils (132) zum ersten Griffteil (131) erfolgt.

2. Vorrichtung nach Anspruch 1, dadurch gekennzeichnet, daß in die Nutenöffnung (310) der Grundplatte (31) Führungsnutkörper (311) einschiebbar sind.

3. Vorrichtung nach Anspruch 2, dadurch gekennzeichnet, daß die Querschnitte der Führungsnutkörper (311) schwalbenschwanzförmig profiliert sind.

4. Vorrichtung nach Anspruch 2, dadurch gekennzeichnet, daß die Führungsnutkörper (311) eine Arretierungsnut (3112) zur Festlegung des Führungsnutkörpers (311) in der Grundplatte (31) aufweisen.

5. Vorrichtung nach Anspruch 2, gekennzeichnet durch eine in den Führungsnutkörpern (311) befindliche Längsnut zur Aufnahme der Faserbündeladerhülle (1).

6. Vorrichtung nach Anspruch 1, dadurch gekennzeichnet, daß an der Grundplatte (31) zwei zusammenhängende Klemmbacken (32) zur sicheren Führung der Faserbündeladerhülle (1) im Vorrichtung schwenkbar festgelegt sind.

7. Vorrichtung nach Anspruch 1, dadurch gekennzeichnet, daß die Klemmbacken (32) mit Federdruck von der Grundplatte (31) abgehalten sind.

8. Vorrichtung nach Anspruch 1, dadurch gekennzeichnet, daß die Klemmbacken (32) durch Eindrehen einer Rändelschraube (6) die Faserbündeladerhülle (1) im Vorrichtung haltern.

9. Vorrichtung nach Anspruch 1, dadurch gekennzeichnet, daß die Klemmbacken (32) zur Führung der Faserbündeladerhülle (1) auf ihrer Unterseite eine Führungsnut (321) aufweisen.

10. Vorrichtung nach Anspruch 1, dadurch gekennzeichnet, daß das Druckelement (5) an das zweite Griffteil (132) angelenkt und die Messerklinge (2) lösbar mit dem Druckelement (5) verbunden ist.

11. Vorrichtung nach Anspruch 1, dadurch gekennzeichnet, daß das Druckelement (5) die Messerklinge (2) im Winkel zwischen 20° und 35°, vorzugsweise von 30° zur Längsachse der Faserbündeladerhülle (1) anstellt.

12. Vorrichtung nach Anspruch 1, dadurch gekennzeichnet, daß die Messerklinge (2) einen doppelten einseitigen Schneidenanschliff (21) hat.

13. Vorrichtung nach Anspruch 12, dadurch gekennzeichnet, daß der Schneidenwinkel zwischen 20° und 30°, vorzugsweise bei 24° und der spitze Winkel an der Spitze der Messerklinge zwischen 35° und 40°, vorzugsweise bei 36° liegt.

14. Vorrichtung nach Anspruch 12, dadurch gekennzeichnet, daß die Messerklinge (2) auf ihrer Anschliffseite mit dem Schneidenwinkel parallel zur Längsachse der Faserbündeladerhülle (1) zugestellt ist.

15. Vorrichtung nach Anspruch 1, dadurch gekennzeichnet, daß das Druckelement (5) auf seiner der Faserbündeladerhülle (1) zugewandten Seite eine Aussparungsnut (51) zur druckfreien Führung der Faserbündeladerhülle (1) besitzt.

16. Vorrichtung nach Anspruch 1, dadurch gekennzeichnet, daß an dem Druckelement (5) eine Druckfeder (7) befestigt ist, welche als Niederhalter für die Klemmbacken (32) und als Schutzbügel für den Schneidenanschliff (21) dient.

17. Vorrichtung nach Anspruch 12, dadurch gekennzeichnet, daß die Messerklinge (2) mit einer ihrer Auschliffseiten parallel zur Führungsachse angeordnet ist.

## Claims

1. Tool for the partial removal of the protective outer sheath on optical fibres, consisting of a device to guide a cable made up of the optical fibres themselves and the protective outer sheath, and also comprising a knife blade positioned at a tangent to the cable in such a way that it peels off portions of the protective outer sheath as the cable moves longitudinally in the guide piece, characterised in that the cutting tool consists of a two-piece handle (13), the two pieces (131, 132) of which are hinged together; in that there is an arm (10) providing a fixed connection between the first handle piece (131) and a base plate (31) incorporating a rebate (310), and also providing a pivoting connection with a set of movable clamping jaws (32); in that there is a pressure piece (5) with a knife blade (2) mounted on another arm (11) which is connected to the free end of the second handle piece (132); and in that the knife blade (2) on the pressure piece (5) is advanced into the cutting position by pivoting the upper handle piece (132) towards the lower handle piece (131)

2. Cutting tool according to Claim 1, characterised in that guide channel blocks (311) can be slid into the rebate (310) in the base plate (31).

3. Cutting tool according to Claim 2, characterised in that the guide channel blocks (311) have a swallow-tail shaped cross-section.

4. Cutting tool according to Claim 2, characterised in that the guide channel blocks (311) have a locating recess (3112) to determine their position in the base plate (31).

5. Cutting tool according to Claim 2, characterised by longitudinal channels in the guide channel blocks (311) to accommodate the cable (1).

6. Cutting tool according to Claim 1, characterised in that there are two connected clamping jaws (32) on the base plate (31) which are pivotably mounted and serve to ensure that the cable (1) is properly guided through the cutting tool.

7. Cutting tool according to Claim 1, characterised in that the clamping jaws (32) are held clear of the base plate (31) by means of spring pressure.

8. Cutting tool according to Claim 1, characterised in that the clamping jaws (32) can be adjusted to hold the cable (1) in the cutting tool by screwing in a knurled bolt (6).

9. Cutting tool according to Claim 1, characterised in that the clamping jaws (32) have a guide channel (321) on the underside to hold the cable (1).

10. Cutting tool according to Claim 1, characterised in that the pressure piece (5) is hinged to the upper handle piece (132) and the knife blade (2) is attached to but can also be separated from the pressure piece (5).

11. Cutting tool according to Claim 1, characterised in that the pressure piece (5) can position the knife blade at any angle between 20° and 35° to the longitudinal axis of the cable (1), the preferred angle being 30°.

12. Cutting tool according to Claim 1, characterised in that the knife blade (2) has a double ground cutting edge (21) on one side.

13. Cutting tool according to Claim 1, characterised in that the cutting angle is between 20° and 30°, the preferred angle being 24°, and the acute angle is between 35° and 40°, the preferred angle being 36°.

14. Cutting tool according to Claim 12, characterised in that the ground side of the knife blade (2) is advanced into position in such a way that the cutting angle is parallel to the longitudinal axis of the cable (1).

15. Cutting tool according to Claim 1, characterised in that the pressure piece (5) has a hollowed-out channel (51) on the side facing the cable (1), its function being to guide the cable (1) without exerting pressure on it.

16. Cutting tool according to Claim 1, characterised in that the pressure piece (5) has a spring (7) fixed to it which serves to hold down the clamping jaws (32) and also acts as a guard plate for the ground cutting edge (21).

17. Cutting tool according to Claim 12, characterised in that one of the ground sides of the knife blade (2) is parallel to the axis of the guide channel.

## Revendications

1. Outil servant à retirer l'enveloppe protectrice des fibres optiques, comprenant un dispositif pour guider la gaine à dénuder, constituée de fibres optiques et d'un tube de protection, ainsi qu'une lame, placée tangentiellement à la gaine, qui dénude la partie de la gaine placée longitudinalement dans le guide, caractérisé en ce que l'outil de coupe est constitué d'une poignée (13) en deux parties (131, 132), assemblées entre elles par une articulation, en ce qu'au niveau de la première poignée (131) et au delà d'une mâchoire (10) des mâchoires de serrage (32) fixes et mobiles sont associées au plateau (31) muni d'encoches (310), en ce qu'au niveau de la deuxième poignée (132) et à l'extrémité libre d'une mâchoire (11) un élément de pression (5) est placé avec une lame (2), et en ce que le positionnement de la lame (2) fixée sur l'élément de pression (5) à l'endroit de coupe est réalisée par pression de la poignée supérieure (132) vers la poignée inférieure (131).

2. Outil de coupe selon la revendication 1, caractérisé en ce que des guides peuvent être insérés indépendamment dans l'ouverture d'encoche (310) du plateau (31).

3. Outil de coupe selon la revendication 2, caractérisé en ce que la section des guides (311) est profilée en queue d'aronde.

4. Outil de coupe selon la revendication 2, caractérisé en ce que les guides (311) sont munis d'une rainure d'arrêt (3112) pour bloquer le guide (311) dans le plateau (31).

5. Outil de coupe selon la revendication 2, caractérisé par une rainure longitudinale située dans les guides, servant de logement à la gaine à dénuder (1).

6. Outil de coupe selon la revendication 1, caractérisé en ce que deux mâchoires (32) du plateau (31) sont pivotables pour assurer le guidage de la gaine (1) dans l'outil de coupe.

7. Outil de coupe selon la revendication 1, caractérisé en ce que les mâchoires de serrage (32) sont retenues par la pression de ressort du plateau (31).

8. Outil de coupe selon la revendication 1, caractérisé en ce que la gaine (1) est maintenue dans les mâchoires de serrage (32) de l'outil de coupe grâce à une vis moletée (6).

9. Outil de coupe selon la revendication 1, caractérisé en ce que les mâchoires de serrage (32) présentent sur leur côté inférieur une rainure (321) pour le guidage de la gaine (1).

10. Outil de coupe selon la revendication 1, caractérisé en ce que l'élément de pression (5) est articulé à la poignée supérieure (132) et que l'assemblage lame(2) /élément de pression (5) peut être démonté.

11. Outil de coupe selon la revendication 1, caractérisé en ce que l'élément de pression (5) permet de régler la lame (2) à un angle de 20° à 35°, de préférence 30° par rapport à l'axe longitudinal de la gaine.

12. Outil de coupe selon la revendication 1, caractérisé en ce que la lame (2) a un affutage (21) double d'un côté.

13. Outil de coupe selon la revendication 1, caractérisé en ce que l'angle de coupe pouvant varier de 20 à 30°, se situe de préférence à 24° et l'angle au sommet pouvant varier de 35 à 40°, se situe de préférence à 36°.

14. Outil de coupe selon la revendication 12, caractérisé en ce que la lame (2) est délivrée, côté affuté, avec l'angle de coupe parallèle à l'axe longitudinal de la gaine (1).

15. Outil de coupe selon la revendication 1, caractérisé en ce que l'élément de pression (5) possède un évidement (51), côté orienté vers la gaine, permettant de guider la gaine sans pression.

16. Outil de coupe selon la revendication 1, caractérisé en ce qu'un ressort (7) est fixé à l'élément de pression (5), ce ressort servant de serre-flan pour les mâchoires de serrage (32) et de protection pour la partie affûtée (21).

17. Outil de coupe selon la revendication 12, caractérisé en ce que la lame (2) et un de ses côtés affûtés est placée parallèlement à l'axe de guidage.
